**Europäisches Patentamt**

**European Patent Office**

*Office européen des brevets*

(19)

(11) Veröffentlichungsnummer: **0 082 986**
**B1**

(12) ## EUROPÄISCHE PATENTSCHRIFT

(45) Veröffentlichungstag der Patentschrift:
04.09.85

(51) Int. Cl.⁴: **C 09 C 1/00**

(21) Anmeldenummer: **82111171.3**

(22) Anmeldetag: **02.12.82**

(54) **Perlglanzpigmente mit verbesserter Lichtbeständigkeit, ihre Herstellung und ihre Verwendung.**

(30) Priorität: **24.12.81 DE 3151343**

(43) Veröffentlichungstag der Anmeldung:
**06.07.83 Patentblatt 83/27**

(45) Bekanntmachung des Hinweises auf die Patenterteilung:
**04.09.85 Patentblatt 85/36**

(84) Benannte Vertragsstaaten:
**BE CH DE FR GB IT LI NL**

(56) Entgegenhaltungen:
**DE - A - 2 545 243**
**FR - A - 2 145 595**

(73) Patentinhaber: **Merck Patent Gesellschaft mit beschränkter Haftung, Frankfurter Strasse 250, D-6100 Darmstadt (DE)**

(72) Erfinder: **Bernhard, Horst, Dr., Haus Nr. 52, A-4164 Schwarzenberg (AT)**

## Beschreibung

Die Erfindung betrifft Perlglanzpigmente mit verbesserter Lichtbeständigkeit auf der Basis von mit Titandioxid und zusätzlich ggf. anderen Metalloxiden überzogenen Glimmerplättchen.

Die Verbesserung der Lichtbeständigkeit ist ein Grundanliegen bei der Herstellung von Pigmenten. Insbesondere für die Verbesserung der Lichtbeständigkeit von mit Titandioxid beschichteten Glimmerschuppen sind bereits zahlreiche Verfahren vorgeschlagen worden. So wird im DBP Nr. 1467468 vorgeschlagen, zu diesem Zweck eine Deckschicht von Aluminiumoxid, Zirkoniumoxid, Zinkoxid, Zinnoxid, Antimonoxid, Eisenoxid, Nickeloxid, Kobaltoxid, Kupferoxid oder Chromoxid aufzubringen. In der DOS Nr. 2106613 wird eine nachträgliche Behandlung mit Silikat vorgeschlagen, und nach den DOS Nrn. 2215191 und 2852585 werden Überzüge von Methacrylatochrom-(III)-chlorid bzw. von Chromhydroxid aufgebracht.

Trotzdem bestand noch ein Bedürfnis nach Pigmenten, die zum einen eine sehr gute Lichtstabilität besitzen, darüber hinaus aber auch preiswert herzustellen sind und interessante Farbeffekte ermöglichen.

Es wurde nun gefunden, dass überraschenderweise dann sehr lichtbeständige und interessante Pigmente erhalten werden, wenn das Basispigment mit einer zusätzlichen Manganoxidschicht überzogen wird. Überraschenderweise kommt man dabei schon mit äusserst geringen Mengen an Manganoxid aus.

Gegenstand der Erfindung sind daher Perlglanzpigmente mit verbesserter Lichtbeständigkeit auf der Basis von mit Titandioxid und ggf. zusätzlich anderen Metalloxiden überzogenen Glimmerplättchen, die dadurch gekennzeichnet sind, dass die Pigmente eine zusätzliche dünne Manganoxidschicht in einer Menge von etwa 0,05 bis 0,5 Gew.-%, bezogen auf das Gesamtpigment, tragen.

Gegenstand der Erfindung ist auch ein Verfahren zur Herstellung dieser Pigmente und ihre Verwendung.

Hauptvorteil der erfindungsgemässen Pigmente ist neben ihrer guten Lichtbeständigkeit vor allem das sehr einfache Herstellungsverfahren. Darüber hinaus können durch die geringe Eigenfärbung des Manganoxids durch Kombination der Eigenfarbe mit geeigneten Interferenzfarben sehr interessante, anders nicht erreichbare Farbeffekte erzielt werden.

Aus der DE-A Nr. 2245243 sind Titandioxid-Weisspigmente bekannt, die zur Verbesserung der Lichtbeständigkeit mit Metallionen dotiert werden, die unter Erzeugung eines Konzentrationsgradienten in das $TiO_2$-Kristallgitter eingebaut werden. Für den Einbau solcher Metallionen in einem Konzentrationsgradienten kommen die Ionen der Metalle aus der Gruppe Niob, Tantal, Molybdän, Wolfram und Antimon, insbesondere Niob, in Frage. Für den Einbau von Metallionen in einem Konzentrationsgradienten kommen aber auch Metallionen einer Verbindung aus der Gruppe der Metalle Kupfer, Mangan und insbesondere Vanadium in einer Menge von $10^{-4}$ bis $10^{-1}$ Atom-% in Frage. Für die Funktionsweise und den Einbau dieser Metallionen in einem Konzentrationsgradienten ist es aber erforderlich, dass auch wenigstens Metallionen aus der Gruppe der Metalle Niob, Tantal, Molybdän, Wolfram oder Antimon, insbesondere Niob, in einem Konzentrationsgradienten im $TiO_2$-Kristall eingebaut werden.

Aus dieser Publikation konnte nicht entnommen werden, dass eine dünne Manganoxidschicht auf der Oberfläche eines mit $TiO_2$ überzogenen Glimmerpigments eine deutliche Verbesserung der Lichtbeständigkeit dieses Pigments bewirkt. Insbesondere konnte auch nicht vorhergesehen werden, ob die Oberflächenbeschichtung mit Manganoxid den Perlglanz der Glimmer/$TiO_2$-Pigmente, der bei den Weisspigmenten der Vorpublikation fehlt, negativ beeinflussen könnte.

Das Herstellungsverfahren der erfindungsgemässen Pigmente orientiert sich an bekannten Verfahren zur Herstellung von Perlglanzpigmenten, insbesondere an dem im DBP Nr. 2009566 beschriebenen Verfahren.

Dabei werden Glimmerschuppen, die in der Regel einen Durchmesser von etwa 5 bis 200 μm und eine Dicke von etwa 0,1 bis 5 μm besitzen, in einer wässerigen Lösung suspendiert, die mit einer geeigneten Säure, wie z. B. Salzsäure oder Schwefelsäure, auf einen pH-Wert von etwa 0,5 bis 5, insbesondere etwa 1,5 bis 3,5, gebracht wird. Zu dieser auf etwa 50 bis 100° C, vorzugsweise etwa 70 bis 80° C, erhitzten Suspension wird dann eine Titansalzlösung langsam zulaufen gelassen, wobei durch gleichzeitige Zugabe einer Base der pH-Wert der Suspension weitgehend konstant gehalten wird.

Zusammen mit dem Titandioxid oder als separate Schicht können auch andere farbige oder nicht farbige Metalloxide auf die Glimmerschuppen aufgebracht werden. Besonders bevorzugt ist dabei die Auffällung von Zinndioxid, das entweder nach dem Verfahren der DOS Nr. 2214545 gemeinsam mit dem Tiotandioxid oder nach dem Verfahren der DOS Nr. 2522572 als separate Schicht alternierend mit Titandioxidschichten aufgefällt werden kann, wobei jeweils nach dem Glühen das Titandioxid in der Rutilmodifikation erhalten wird. Diese Pigmente auf Rutilbasis zeichnen sich durch eine besonders hohe Lichtbeständigkeit aus, die durch die erfindungsgemässe Manganoxidschicht noch verbessert wird.

Weiterhin bevorzugt ist das gleichzeitige Auffällen von Siliciumdioxid zusammen mit einer oder mehreren der Metalloxidschichten bei der Herstellung der Basispigmente. Dies kann zweckmässig so erfolgen, dass der bei der Auffällung von Titandioxid und Zinndioxid zur Neutralisation verwendeten Alkalilauge etwa 2 bis 10 g/l Alkalisilicat zugesetzt wird.

Die Basispigmente können zur weiteren Beschichtung mit Manganoxid sowohl in geglühter als auch ungeglühter Form eingesetzt werden. Falls ein auf übliche Weise geglühtes Basispigment verwendet wird, wird dies zunächst in Wasser aufgeschlämmt und auf einen pH-Wert oberhalb 3, vorzugsweise zwischen 5 und 9, eingestellt. Die Auffällung von Manganoxid wird dann vorzugsweise bei erhöhter Temperatur, insbesondere etwa 50 bis 100° C, so vorgenommen, dass eine Mangan-(II)-Salzlösung langsam zudosiert wird, wobei der pH-Wert der Suspension weitgehend konstant gehalten wird durch gleichzeitiges Zudosieren von verdünnten Basen, insbesondere Ammoniak.

Als Mangansalze können im Prinzip alle unter diesen Bedingungen stabilen Salze wie z. B. Mangan-(II)-chlorid, -bromid, -jodid, -sulfat, -nitrat und -acetat verwendet werden. Ausserdem können höherwertige Manganverbindungen eingesetzt werden, wenn die Pigmentsuspension ein geeignetes Reduktionsmittel enthält. So können Lösungen von Alkalipermanganaten zudosiert werden, wenn als Reduktionsmittel z. B. $H_2O_2$, Oxalsäure, Ameisensäure oder ähnliches verwendet wird. Bevorzugt werden jedoch Mangan-(II)-salze und insbesondere Mangansulfat, -chlorid und -nitrat verwendet. Der Zulauf der Mangansalzlösung sollte so dosiert werden, dass das dabei ausfallende manganhydroxid quantitativ auf den Glimmerschuppen abgeschieden wird. Die dabei zur Anwendung kommenden Zulaufgeschwindigkeiten werden so gewählt, dass pro Minute und pro Quadratmeter zu belegender Oberfläche etwa 0,01 bis 20 × 10⁻⁵ mol an auszufällenden Salzen zugeführt wird.

Nach Erreichen der gewünschten Schichtdicke der Manganhydroxidschicht wird die Beschichtung beendet und die Pigmente werden analog dem üblichen Verfahren abgetrennt, gewaschen, getrocknet und geglüht. Zum Glühen werden Temperaturen von etwa 500 bis 1000° C, insbesondere von etwa 700 bis 1000° C, angewendet. Dabei wird das aufgefällte Manganhydroxid entwässert und in das Oxid überführt.

Vorzugsweise geht man bei der zusätzlichen Beschichtung mit Manganoxid nicht von geglühten Basispigmenten aus, sondern von ungeglühten Basispigmenten. Dabei kann unmittelbar nach der Beschichtung der Glimmerschuppen mit dem Titandioxid und ggf. anderen Metalloxiden ohne eine Zwischenisolierung sofort in der gleichen Suspension die Beschichtung mit Manganhydroxid angeschlossen werden.

Dazu wird lediglich die Suspension auf einen pH-Wert von oberhalb 3, vorzugsweise zwischen 5 und 9, gebracht und dann wie oben beschrieben verfahren. Die bei diesem einstufigen Verfahren erhaltenen Pigmente sind denen, die beim zweistufigen Verfahren gewonnen werden, qualitativ vergleichbar, so dass das einstufige Verfahren erhebliche Vorteile mit sich bringt.

Durch Variation der Dicke der aufgefällten Manganoxidschicht kann sowohl die Lichtstabilität als auch die Farbe der Pigmente beeinflusst werden. Zur Lichtstabilisierung sollten mindestens etwa 0,05 Gew.-% Manganoxid, bezogen auf das Gesamtpigment, vorzugsweise mindestens etwa 0,1 Gew.-% Manganoxid, aufgefällt werden. Da das beim Glühen entstehende Manganoxid eine Eigenfarbe besitzt, die bei sehr dicken Schichten sich unter Umständen störend bemerkbar machen kann, werden in der Regel nicht mehr als etwa 0,5 Gew.-% Manganoxid aufgefällt. Die Eigenfarbe des manganoxids kann jedoch in Verbindung mit geeigneten Interferenzfarben zur Erzielung von ansprechenden Zweifarbeneffekten ausgenutzt werden.

Die nach der Erfindung erhaltenen Pigmente besitzen eine deutlich verbesserte Lichtstabilität, so dass durch die Erfindung wertvolle neue Pigmente zur Verfügung gestellt werden. Die erfindungsgemässen Pigmente können wie die bisher bekannten verwendet werden, also z. B. zur Pigmentierung von Kunststoffen, Farben oder Lacken, aber insbesondere auch in Körperflegemitteln und Kosmetika. Durch die verbesserte Lichtechtheit sind auch alle Anwendungen bevorzugt, bei denen die Pigmente in verstärktem Masse Umwelteinflüssen ausgesetzt sind, insbesondere z. B. in Autolacken.

*Beispiel 1:*

Nach dem Verfahren der DOS Nr. 2522572 werden 45 g Kaliglimmer mit einer Plättchengrösse zwischen 10 und 70 μm in wässeriger Suspension mit alternierenden Schichten von Titanhydroxid und Zinnhydroxid bis zum Erreichen einer gelben Interferenzfarbe beschichtet. Abweichend vom Verfahren der DOS Nr. 2522572 wird mit Beginn der Fällung der zweiten Zinnhydroxidschicht zur Fällung eine Natronlauge verwendet, die etwa 4 g $SiO_2$/l als Wasserglas enthält. Nach Erreichen der gelben Interferenzfarbe wird dekantiert, erneut in 1000 ml Wasser suspendiert, auf 75° C erhitzt, mit 5%igem Ammoniak ein pH-Wert von 6,1 eingestellt und langsam eine Lösung von 0,28 g $MnSO_4 \cdot H_2O$ in 80 ml Wasser zugegeben, wobei der pH-Wert durch zudosieren von Ammoniak konstant gehalten wird. Danach wird abfiltriert, gewaschen, getrocknet und 30 min bei 800° C geglüht. Man erhält ein Pigment mit 0,15 Gew.-% Manganoxid, das sich durch hohe Lichtbeständigkeit auszeichnet.

*Beispiel 2:*

Nach dem Verfahren der DOS Nr. 2522572 wird Kaliglimmer bis zum Erreichen einer gelb-roten Interferenzfarbe beschichtet, wobei entsprechend Beispiel 1 gegen Ende der Beschichtung eine Wasserglas-enthaltende Natronlauge verwendet wird. Nach Dekantieren und erneutem Aufschlämmen in Wasser wird bei einem pH-Wert von 6 eine Lösung von 0,12 g $MnSO_4 \cdot H_2O$ in 40 ml Wasser zulaufen gelassen und danach abfiltriert, gewaschen, getrocknet und bei 800° C 30 min geglüht. In gleicher Weise wird das Basispigment mit 0,24 g und mit 0,48 g $MnSO_4 \cdot H_2O$ beschichtet. Es werden dabei Pigmente erhalten, die 0,05, 0,1 und 0,2 Gew.-% Manganoxid enthalten.

Die Untersuchung der Lichtbeständigkeit dieser Pigmente zeigt, dass bereits mit 0,1 Gew.-% Manganoxid die Stabilisierung des Pigmentes erreicht wird.

*Beispiel 3:*

Nach dem Verfahren der DOS Nr. 2522572 wird Kaliglimmer bis zum Erreichen einer grünen Interferenzfarbe mit Titanhydroxid und Zinnhydroxid beschichtet, wobei im Gegensatz zu Beispiel 1 und 2 eine silikatfreie Natronlauge verwendet wird. Nach Erreichen der grünen Interferenzfarbe wird die Beschichtung unterbrochen und die Suspension mit verdünntem Ammoniak auf pH 6 eingestellt und mit einer Lösung von 0,12 g $MnSO_4 \cdot H_2O$ in 40 ml Wasser versetzt. Nach Filtration, Waschen, Trocknen und Glühen, erhält man ein Pigment mit 0,05 Gew.-% Manganoxid. Durch analoge Beschichtung mit 0,24 g und mit 0,48 g $MnSO_4 \cdot H_2O$ erhält man nach der Aufarbeitung Pigmente mit 0,1 und 0,2 Gew.-% Manganoxid. Die Untersuchung der Lichtbeständigkeit dieser Pigmente zeigt, dass bereits mit 0,1 Gew.-% Manganoxid weitgehende Stabilisierung erreicht wird.

*Beispiel 4:*

Nach dem Verfahren des DBP Nr. 2009566 wird Kaliglimmer mit Titanhydroxid bis zum Erreichen einer grünen Interferenzfarbe beschichtet, wobei abweichend vom Verfahren des DBP Nr. 2009566 eine natronlauge verwendet wird, die 5 g/l $SiO_2$ enthält. Nach Erreichen der grünen Interferenzfarbe wird die Suspension mit 5%igem Ammoniak auf pH 6 eingestellt und langsam mit einer Lösung von 0,1 g $MnSO_4 \cdot H_2O$ in 40 ml Wasser versetzt. In analoger Weise werden Beschichtungen unter Verwendung von 0,2 g und 0,4 g $MnSO_4 \cdot H_2O$ durchgeführt. Nach Abfiltrieren, Waschen, Trocknen und Glühen erhält man Pigmente, die 0,05, 0,1 bzw. 0,2 Gew.-% Manganoxid enthalten. Die Untersuchung der Lichtbeständigkeit dieser Pigmente, die im Gegensatz zu den Pigmenten der Beispiele 1 bis 3 das Titandioxid in Anatasform enthalten, zeigt, dass auch hier durch die Beschichtung mit Manganoxid eine deutliche Stabilisierung erreicht wird. Die Lichtbeständigkeit ist jedoch schlechter als die der entsprechenden Rutilpigmente und wird auch erst mit grösseren mengen manganoxid erreicht.

*Beispiel 5:*

Eine Suspension von 40 g eines Rutilglimmerpigmentes mit gelber Interferenzfarbe in 800 ml Wasser wird auf 75° C erhitzt und bei pH 6 mit einer Lösung von 0,238 g $MnSO_4 \cdot H_2O$ in 20 ml Wasser versetzt. Danach wird abfiltriert, gewaschen, getrocknet und 30 min bei 800° C geglüht. Man erhält ein Pigment mit 0,25 Gew.-% Manganoxid und sehr guter Lichtbeständigkeit.

## Patentansprüche

1. Perlglanzpigmente mit verbesserter Lichtbeständigkeit auf der Basis von mit Titandioxid und ggf. zusätzlich anderen Metalloxiden überzogenen Glimmerplättchen, dadurch gekennzeichnet, dass die Pigmente eine zusätzliche dünne Manganoxidschicht in einer Menge von etwa 0,05-0,5 Gew.-%, bezogen auf das Gesamtpigment, tragen.

2. Perlglanzpigmente nach Anspruch 1, dadurch gekennzeichnet, dass eine oder mehrere der Metalloxidschichten zusätzlich noch $SiO_2$ enthalten.

3. Perlglanzpigmente nach einem der beiden Ansprüche 1 oder 2, dadurch gekennzeichnet, dass als Basispigment ein Rutilpigment verwendet wird.

4. Verfahren zur Herstellung von Perlglanzpigmenten mit verbesserter Lichtbeständigkeit auf der Basis von mit Titandioxid überzogenen Glimmerplättchen, wobei Glimmer in wässeriger Suspension mit einer oder mehreren Titandioxidaquatschichten und ggf. damit vermischt oder separat mit weiteren Metalloxidschichten belegt und danach gewaschen, getrocknet und geglüht wird, dadurch gekennzeichnet, dass entweder direkt nach dem Beschichten mit der Titandioxidaquatschicht oder nach dem Glühen auf das Basispigment eine zusätzliche Schicht von Manganhydroxid in einer Menge von 0,05-0,5Gew.-%, bezogen auf das Gesamtpigment und bezogen auf das nach dem Glühen vorliegende Manganoxid, aufgefällt wird und das Pigment danach gewaschen, getrocknet und geglüht wird.

5. Verfahren nach Anspruch 4, dadurch gekennzeichnet, dass die Fällung des Titandioxidaquats in an sich bekannter Weise so vorgenommen wird, dass beim Glühen die Rutilform entsteht.

6. Verfahren nach einem der beiden Ansprüche 4 oder 5, dadurch gekennzeichnet, dass zusammen mit einer oder mehreren der Metalloxidschichten zusätzlich noch $SiO_2$ aufgefällt wird.

7. Verwendung der Perlglanzpigmente nach Anspruch 1 zur Pigmentierung von Kunststoffen, Lacken, Farben und Körperpflegemitteln.

## Revendications

1. Pigments nacrés à résistance à la lumière améliorée à base de paillettes de mica revêtues d'oxyde de titane et, le cas échéant, d'autres oxydes métalliques, caractérisés en ce que les pigments portent une couche fine supplémentaire d'oxyde de manganèse d'environ 0,05 à 0,5% en poids rapporté au pigment total.

2. Pigments nacrés selon la revendication 1, caractérisés en ce qu'une ou plusieurs couches d'oxydes métalliques contiennent encore en plus $SiO_2$.

3. Pigments nacrés selon l'une des revendications 1 ou 2, caractérisés en ce que, comme pigment de base, on utilise un pigment de rutile.

4. Procédé de préparation de pigments nacrés à résistance à la lumière améliorée, à base de paillettes de mica revêtues de dioxyde de titane, dans lequel le mica en suspension aqueuse est revêtu d'une ou plusieurs couches de dioxyde de titane hydratisé et, le cas échéant, d'autres couches d'oxydes métalliques mélangées ou séparées, et est ensuite lavé, séché et calciné, caractérisé en ce que, soit directement après le revêtement par une couche de dioxyde de titane hydratisé ou après la calcination, on précipite une couche supplémentaire d'hydroxyde de manganèse à raison de 0,05-0,5% en poids, rapporté au pigment total et rapporté à l'oxyde de manganèse restant après calcination, et ensuite le pigment est lavé, séché et calciné.

5. Procédé selon la revendication 4, caractérisé en ce que la précipitation du dioxyde de titane hydratisé est réalisée de la façon connue, de sorte qu'il se forme du rutile à la calcination.

6. Procédé selon l'une des revendications 4 ou 5, caractérisé en ce que, avec une ou plusieurs couches d'oxyde métallique, on précipite encore en plus du SiO₂.

7. Utilisation de pigments nacrés selon la revendication 1, pour pigmenter des matières plastiques, des peintures, des encres et des produits de soin du corps.

## Claims

1. Nacreous pigments having improved light fastness and based on mica platelets coated with titanium dioxide and, if appropriate, additionally other metal oxides, characterised in that the pigments carry an additional thin manganese oxide layer in an amount of about 0.05-0.5% by weight, relative to total pigment.

2. Nacreous pigments according to Claim 1, characterised in that one or more of the metal oxide layers also contains SiO₂.

3. Nacreous pigments according to Claim 1 or 2, characterised in that a rutile pigment is used as base pigment.

4. Process for preparing nacreous pigments having improved light fastness and based on mica platelets coated with titanium dioxide, and which mica is coated in aqueous suspension with one or more titanium dioxide hydrate layers and, if appropriate, with further metal oxide layers mixed with the titanium dioxide hydrate or separately therefrom and then washed, dried and calcined, characterised in that an additional layer of manganese hydroxide is precipitated onto the base pigment in an amount of 0.05-0.5% by weight, relative to total pigment and relative to the manganese oxide present after the calcination, either directly after the coating with the titanium dioxide hydrate layer or after the calcination and the pigment is then washed, dried and calcined.

5. Process according to Claim 4, characterised in that the titanium dioxide hydrate is precipitated in such a way, which is in itself known, that the rutile form is formed in the calcination.

6. Process according to Claim 4 or 5, characterised in that SiO₂ is also precipitated on together with one or more of the metal oxide layers.

7. Use of the nacreous pigments according to Claim 1, for pigmenting plastics, lacquers, paints and toiletries.